# FASCICULE DE BREVET EUROPEEN

(11) **EP 2 720 941 B1**
(45) Date de publication et mention de la délivrance du brevet: **05.08.2015**
(21) Numéro de dépôt: 12738506.0
(22) Date de dépôt: 19.06.2012
(51) Int. Cl.: B64C 11/18, B64C 11/30, B64C 11/48, B64C 11/20, F02K 3/02

(54) **PALE, EN PARTICULIER A CALAGE VARIABLE, HELICE COMPRENANT DE TELLES PALES, ET TURBOMACHINE CORRESPONDANTE**
SCHAUFEL, INSBESONDERE EINE SCHAUFEL MIT VARIABLER NEIGUNG, PROPELLER MIT SOLCHEN SCHAUFELN UND ENTSPRECHENDE TURBOMASCHINE
BLADE, PARTICULARLY VARIABLE-PITCH BLADE, PROPELLOR COMPRISING SUCH BLADES AND CORRESPONDING TURBOMACHINE

(30) Priorité: 20.06.2011 FR 1155413
(43) Date de publication de la demande: 23.04.2014
(73) Titulaire: Snecma, 75015 Paris (FR)
(72) Inventeur: PASCAL, Sébastien, F-77550 Moissy-cramayel (FR)
(74) Mandataire: Gevers France
(86) Numéro de dépôt international: PCT/FR2012/051382
(87) Numéro de publication internationale: WO 2012/175863

(56) Documents cités:
- EP-A2- 2 287 072
- FR-A1- 2 935 349
- US-A1- 2010 124 500

## Description

La présente invention concerne une pale, en particulier à calage variable, une hélice comprenant de telles pales, ainsi qu'une turbomachine correspondante, notamment à soufflante non carénée.

Bien que la présente invention soit particulièrement adaptée aux turbomachines à soufflante non carénée (désignées en anglais « open rotor » ou encore «unducted fan»), sa mise en oeuvre n'est toutefois pas restreinte à une telle application.

De façon connue, une turbomachine à soufflante non carénée comprend deux hélices externes coaxiales et contrarotatives, respectivement amont (avant) et aval (arrière), qui sont chacune entraînées en rotation par une turbine et qui s'étendent, sensiblement radialement, à l'extérieur de la nacelle de la turbomachine. Chaque hélice comprend usuellement un moyeu concentrique à l'axe longitudinal de la turbomachine, sur lequel sont fixées des pales.

Cependant, malgré une faible consommation de carburant, l'interaction aérodynamique entre les hélices contrarotatives amont et aval d'une telle turbomachine à soufflante non carénée engendre des niveaux acoustiques de fonctionnement élevés. En effet, la rotation des pales des hélices contrarotatives amont et aval provoque la formation de sillages, de tourbillons au bout des pales, ainsi que de turbulences à la base des pales. Ces perturbations aérodynamiques en aval de l'hélice amont sont à l'origine de bruit aérodynamique d'interaction lorsqu'elles heurtent l'hélice aval et dégradent le rendement propulsif global de la turbomachine.

Aussi, pour réduire les émissions sonores indésirables de telles turbomachines et ainsi satisfaire aux critères de certifications acoustiques imposés par les autorités aériennes, il est connu :
- d'optimiser le profil des pales pour diminuer l'intensité du sillage des hélices et des tourbillons parasites apparaissant au bout des pales, au moins pour certains modes de fonctionnement des turbomachines (correspondant par exemple à différentes phases de vol d'un aéronef) ; et/ou
- de contrôler l'écoulement d'air autour des pales par des technologies adaptées (par exemple l'utilisation de bords de fuite ou d'extrémités de pales soufflés) sans dégradation des performances aérodynamiques de l'hélice associée.

Toutefois, il est fréquent que la conception de telles hélices silencieuses - par optimisation du profil des pales et/ou contrôle des écoulements d'air - ne prévienne pas la formation de turbulences apparaissant à la base des pales.

En particulier, dans le cas où les pales sont montées à calage variable sur le moyeu des hélices amont et aval pour ajuster leur calage angulaire (c'est-à-dire l'angle formé par la corde de la base de chaque pale et le plan de rotation de l'hélice) par rotation des pales autour de leur axe longitudinal en fonction de conditions de fonctionnement souhaitées, les turbulences à la base des pales deviennent le principal contributeur des perturbations aérodynamiques atteignant l'hélice aval pour certains calages angulaires prédéfinis (correspondant par exemple aux phases de décollage, d'approche, d'atterrissage, etc.).

En effet, chaque pale étant formée d'un pied de pale qui la maintient mobile en rotation dans le moyeu de l'hélice correspondante, il se crée, pour les calages angulaires précités, des espaces vides entre la base des pales et la face courbée du moyeu en regard : la base des pales ne pouvant pas épouser en permanence la forme courbe du moyeu. Le document EP 2 287 072 A2 montre une telle hélice.

De tels espaces vides - définis par une zone vide amont et une zone vide aval séparées l'une de l'autre par le pied de chaque pale - accentuent l'activité turbulente à la base des pales des hélices, notamment lorsque celles-ci sont fortement calées (par exemple au décollage et à l'approche), ce qui dégrade davantage les performances aérodynamiques de l'hélice aval et augmente les fluctuations de vitesse sur cette dernière à l'origine des émissions sonores indésirables.

La présente invention a pour objet de remédier à ces inconvénients et, notamment, d'améliorer le rendement propulsif des turbomachines à soufflante non carénée, tout en réduisant l'intensité du bruit aérodynamique d'interaction.

A cette fin, selon l'invention, la pale, en particulier à calage variable et destinée à être montée sur le moyeu d'une hélice de turbomachine de sorte qu'un espace vide est défini entre la base de la pale et la face du moyeu en regard de ladite base, est remarquable par le fait qu'elle comporte des moyens d'obturation escamotables aptes à occuper, de façon réversible, au moins l'une des deux positions suivantes :
- une position déployée, dans laquelle les moyens d'obturation escamotables obturent, au moins partiellement, ledit espace vide; et
- une position extrême escamotée, dans laquelle lesdits moyens escamotables sont maintenus en dehors dudit espace vide.

Ainsi, grâce à l'invention, lorsqu'il existe ou se forme un espace vide entre la base de la pale et la face courbe du moyeu d'hélice sur lequel est montée la pale (notamment lorsque cette dernière est montée à calage variable), les moyens d'obturation peuvent être déployés pour combler cet espace vide et ainsi réduire sensiblement l'intensité des turbulences apparaissant à la base de la pale.

Dans le cas particulier où de telles pales, conformes à l'invention et à calage variable, sont rapportées sur le moyeu de l'hélice amont d'une turbomachine à double hélices et à soufflante non carénée, le déploiement des moyens d'obturation pour certains calages prédéfinis (correspondant à des phases de décollage, d'atterrissage, etc.) - à l'origine de la formation des espaces vides perturbateurs - provoque une réduction et/ou une suppression desdits espaces vides. L'affaiblissement ou la disparition des turbulences induites à la base des pales par lesdits espaces vides diminue leur interaction avec l'hélice aval de la turbomachine. En conséquence, l'intensité du bruit aérodynamique d'interaction est réduite et les performances propulsives de la turbomachine considérée améliorées.

Dans une réalisation particulière de la présente invention, ladite position déployée est une position extrême, de sorte que lesdits moyens d'obturation sont aptes à se déplacer entre les deux positions extrêmes escamotée et déployée. En outre, selon cette réalisation, les moyens d'obturation peuvent être maintenus dans une position intermédiaire entre les deux positions extrêmes déployée et escamotée.

De préférence, la pale comprend au moins un logement qui est ménagé dans sa base et qui est apte à recevoir lesdits moyens d'obturation lorsqu'ils occupent la position escamotée, de sorte que, une fois escamotés, les moyens d'obturation ne gênent pas la rotation de la pale - lorsque celle-ci est à calage variable - ni n'engendrent de turbulences parasites supplémentaires.

En outre, la pale comprend avantageusement des moyens d'actionnement pour commander le déploiement ou l'escamotage des moyens d'obturation, afin qu'ils occupent successivement la position déployée et la position escamotée, et inversement.

Ces moyens d'actionnement peuvent également être logés dans la pale. En variante ou en complément, les moyens d'actionnement peuvent comporter au moins un électroaimant logé dans le moyeu de l'hélice associée, les moyens d'obturation étant, dans ce cas, de préférence constitués, au moins superficiellement, d'un matériau ferromagnétique.

Selon un mode de réalisation préféré conforme à la présente invention, les moyens d'obturation comportent au moins l'un des deux éléments suivants :
- un volet d'obturation amont comprenant un bord d'attaque qui prolonge le bord d'attaque de la pale dans la position déployée ;
- un volet d'obturation aval comprenant un bord de fuite qui prolonge le bord de fuite de la pale dans la position déployée.

Ainsi, en prolongeant le bord d'attaque et/ou de fuite de la pale tout en comblant l'espace vide existant ou formé, on prévient efficacement la formation de turbulences perturbatrices ou, tout au moins, on en limite l'intensité.

En outre, chaque volet d'obturation, amont ou aval, comprend avantageusement une base conformée pour épouser, au moins en partie, la face du moyeu en regard dans la position déployée, de manière à obturer le plus efficacement possible l'espace vide.

De préférence, chaque volet d'obturation, amont ou aval, est articulé à la pale, en particulier au pied de pale, par une liaison pivot. En variante ou en complément, un coulissement des volets est également envisageable.

Par ailleurs, la présente invention concerne également une hélice, notamment pour turbomachine à soufflante non carénée, comprenant un moyeu monté rotatif autour d'un axe de rotation, laquelle comporte une pluralité de pales du type de celle décrite précédemment, qui sont montées sur ledit moyeu.

En outre, les pales peuvent être montées à calage variable, de manière à permettre leur orientation angulaire.

La présente invention concerne encore une turbomachine comportant au moins une hélice du type de celle spécifiée ci-dessus.

En particulier, la turbomachine peut être à soufflante non carénée et comporter deux hélices coaxiales et contrarotatives, dans laquelle au moins l'hélice amont est du type de celle mentionnée précédemment.
Les figures du dessin annexé feront bien comprendre comment l'invention peut être réalisée. Sur ces figures, des références identiques désignent des éléments semblables.
La figure 1 est une vue en coupe longitudinale schématique d'un exemple de réalisation d'une turbomachine à soufflante non carénée conforme à l'invention.
La figure 2 est une coupe schématique partielle d'une pale d'hélice de la turbomachine de la figure 1, dont les volets d'obturation amont et aval sont déployés.
La figure 3 est semblable à la figure 2, les volets d'obturation amont et aval étant escamotés.

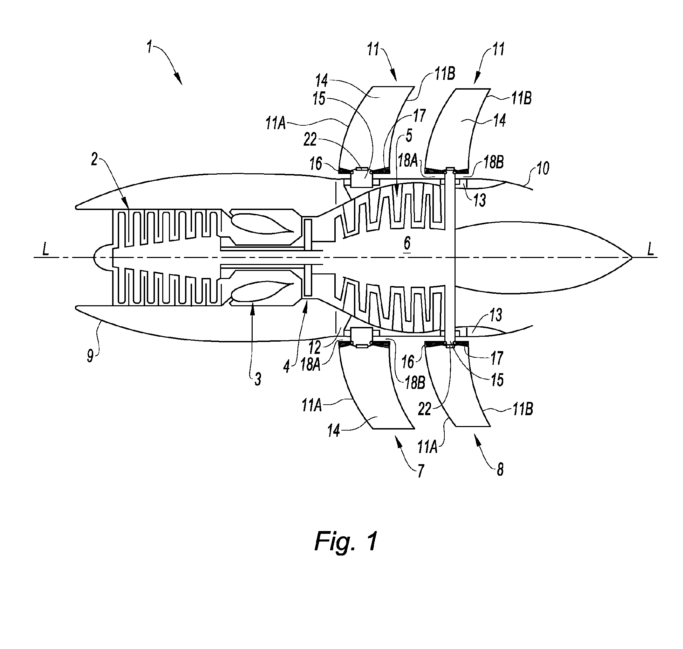

Sur la figure 1, on a représenté, de façon schématique, une turbomachine 1 à soufflante non carénée, conforme à l'invention, qui comporte d'amont en aval, dans le sens d'écoulement des gaz à l'intérieur de la turbomachine d'axe longitudinal L-L, un compresseur 2, une chambre annulaire de combustion 3, une turbine haute pression 4 et deux turbines basse pression 5 et 6 qui sont contrarotatives, c'est-à-dire qu'elles tournent dans deux sens opposés autour de l'axe longitudinal L-L.

Chacune des turbines basse pression 5 et 6 est solidaire en rotation d'une hélice externe 7, 8 s'étendant radialement à l'extérieur de la nacelle 9 de la turbomachine 1, la nacelle 9 étant sensiblement cylindrique et s'étendant le long de l'axe L-L autour du compresseur 2, de la chambre de combustion 3 et des turbines 4, 5 et 6. Les gaz de combustion sortant des turbines sont expulsés à travers une tuyère 10 pour augmenter la poussée.

Les hélices 7 et 8 sont disposées coaxialement l'une derrière l'autre et comportent une pluralité de pales 11 équi-angulairement réparties autour de l'axe longitudinal L-L. Les pales 11 s'étendent sensiblement radialement et sont du type à calage variable, c'est-à-dire qu'elles peuvent tourner autour de leur axe longitudinal de manière à optimiser leur position angulaire en fonction des conditions de fonctionnement souhaitées de la turbomachine 1. Bien entendu, en variante, les pales des hélices pourraient également être à calage fixe.

Chaque hélice amont 7 ou aval 8 comprend un moyeu rotatif 12, 13 supportant les pales 11 et disposé de façon concentrique à l'axe longitudinal L-L de la turbomachine 1, perpendiculairement à celui-ci.

Les pales 11 sont formées d'un corps de pale 14 et d'un pied de pale 15, monté de façon rotative sur le moyeu 12, 13 correspondant.

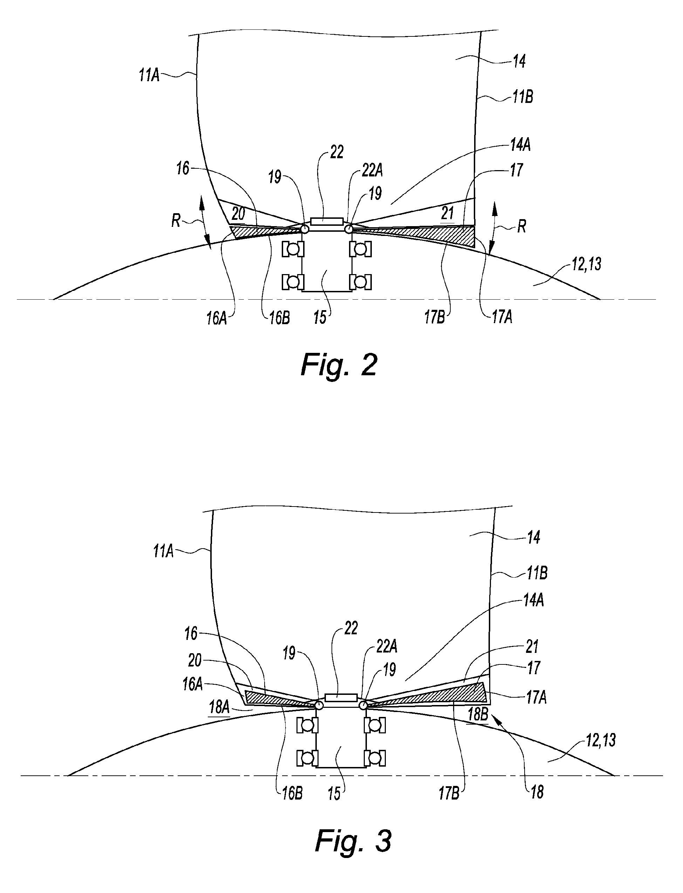

Selon l'invention, chaque pale 11 des hélices amont 7 et aval 8 comporte des moyens d'obturation escamotables 16 et 17 qui peuvent occuper successivement, et de façon réversible, au moins l'une des deux positions extrêmes suivantes :
- une position déployée (figure 2), dans laquelle ils obturent l'espace vide 18 formé, pour certains calages angulaires déterminés, entre la base 14A de la pale 11 et la face du moyeu 12, 13 en regard de cette dernière ; et
- une position escamotée (figure 3), dans laquelle ils sont maintenus à l'extérieur dudit espace vide 18.

Comme le montrent les figures 2 et 3, l'espace vide 18 est défini par une zone vide amont 18A et une zone vide aval 18B, séparées l'une de l'autre par le pied de pale 15. Les dimensions de l'espace vide 18 peuvent varier en fonction du calage angulaire imposé à la pale 11 associée.

Dans l'exemple considéré, les moyens d'obturation comportent :
- un volet d'obturation amont 16 comprenant un bord d'attaque 16A qui prolonge le bord d'attaque 11A de la pale 11 dans la position déployée. Autrement dit, le bord d'attaque 11A de la pale 11 et celui 16A du volet amont 16 forment une ligne sensiblement continue, limitant ainsi l'apparition de perturbations aérodynamiques ;
- un volet d'obturation aval 17 comprenant un bord de fuite 17A qui prolonge le bord de fuite 11B de la pale 11 dans la position déployée. Les bords de fuite 11B et 17A forment ainsi une ligne sensiblement continue.

Chaque volet d'obturation amont 16 ou aval 17 comprend une base 16B, 17B conformée pour épouser la face du moyeu 12, 13 en regard, dans la position déployée (voir la figure 2), au moins pour certains calages angulaires prédéfinis de la pale 11, de manière à obtenir une obturation intégrale, ou quasi intégrale, des zones vides amont 18A et aval 18B.

Les volets amont 16 et aval 17 de la pale 11 sont respectivement articulés, par une liaison pivot 19, au pied 15 de la pale 11.

Dans la position escamotée, les volets d'obturation 16 et 17 sont rétractés dans des logements 20 et 21, respectivement, ménagés dans la base 14A de la pale 11. Il est bien évident que, dans une variante, les logements 20 et 21 pourraient n'être qu'un seul et même logement.

Un actionneur 22, intégré dans le corps 14 de la pale 11, commande le déploiement ou l'escamotage des volets d'obturation amont 16 et aval 17, de telle sorte qu'ils occupent simultanément la position déployée ou la position escamotée. En variante, l'actionneur pourrait commander de façon indépendante le déploiement ou l'escamotage de chacun des volets d'obturation amont et aval.

L'actionneur 22 est relié à chacun des volets d'obturation 16 et 17 par une tige mobile escamotable 22A qui, lorsqu'elle se déploie ou se rétracte, entraîne en rotation les volets 16 et 17 par l'intermédiaire des liaisons pivot 19 correspondantes (la rotation des volets 16 et 17 est symbolisée sur la figure 2 par la flèche R).

Ainsi, grâce à l'invention, quel que soit le calage angulaire des pales 11 des hélices amont 7 et aval 8, les volets d'obturation 16 et 17 se déploient par commande de l'actionneur 22 pour obturer l'espace vide 18 (respectivement les zones vides 18A et 18B) associé au calage angulaire considéré, ce qui affaiblit, voire supprime, les turbulences apparaissant à la base de la pale 11. De cette façon, on limite sensiblement les turbulences qui vont interagir avec l'hélice aval 8 et, par voie de conséquence, l'intensité du bruit aérodynamique d'interaction.

On notera en outre que, pour permettre la rotation de la pale 11 considérée autour de son axe longitudinale pour atteindre un calage angulaire déterminé, les volets d'obturation 16 et 17 sont préalablement rétractés dans les logements correspondants 20 et 21 par l'actionneur 22.

Dans une variante de réalisation conforme à l'invention, le déploiement des volets d'obturation amont 16 et aval 17, depuis les logements 20 et 21, est réalisé par l'activation d'électro-aimants (non représentés sur les figures) agencés dans le moyeu 12, 13 de l'hélice 7, 8 correspondante.

Dans cette variante, les volets 16 et 17 sont, au moins superficiellement, formés en matériau ferromagnétique. La rétraction des volets d'obturation 16 et 17 est, quant à elle, obtenu par application d'une force centrifuge sur les volets lors de la rotation de l'hélice, après désactivation des électro-aimants.

Il est à noter que, dans l'exemple décrit des figures 1 à 3, les pales 11 des hélices amont 7 et aval 8 sont toutes équipées de volets d'obturation amont 16 et aval 17. Bien entendu, en variante, seules les pales de l'hélice amont pourraient comporter de tels volets d'obturation.

## Revendications

1. Pale, en particulier à calage variable, destinée à être montée sur le moyeu (12, 13) d'une hélice (7, 8) de turbomachine (1) de sorte qu'un espace vide (18, 18A, 18B) est défini entre la base (14A) de la pale (14) et la face du moyeu (12, 13) en regard de ladite base (14A),
**caractérisée par le fait qu'**elle comporte des moyens d'obturation escamotables (16, 17) aptes à occuper, de façon réversible, au moins l'une des deux positions suivantes :
- une position déployée, dans laquelle les moyens d'obturation escamotables obturent, au moins partiellement, ledit espace vide (18, 18A, 18B) ; et
- une position extrême escamotée, dans laquelle lesdits moyens escamotables sont maintenus en dehors dudit espace vide.

2. Pale selon la revendication précédente, dans laquelle ladite position déployée est une position extrême.

3. Pale selon l'une des revendications précédentes, comprenant au moins un logement (20, 21) qui est ménagé dans sa base (14A) et qui est apte à recevoir lesdits moyens d'obturation (16, 17) lorsqu'ils occupent la position escamotée.

4. Pale selon l'une des revendications précédentes, comprenant des moyens d'actionnement (22) pour commander le déploiement ou l'escamotage des moyens d'obturation (16, 17), afin qu'ils occupent successivement la position déployée et la position escamotée, et inversement.

5. Pale selon la revendication précédente, dans laquelle les moyens d'actionnement (22) sont logés dans la pale (11).

6. Pale selon la revendication 4, dans laquelle :
- les moyens d'actionnement (22) comportent au moins un électroaimant logé dans le moyeu (12, 13) de l'hélice (7, 8) ; et
- les moyens d'obturation (16, 17) sont constitués, au moins superficiellement, d'un matériau ferromagnétique.

7. Pale selon l'une des revendications précédentes, dans laquelle les moyens d'obturation comportent au moins l'un des deux éléments suivants :
- un volet d'obturation amont (16) comprenant un bord d'attaque (16A) qui prolonge le bord d'attaque (11A) de la pale (11) dans la position déployée ;
- un volet d'obturation aval (17) comprenant un bord de fuite (17A) qui prolonge le bord de fuite (11B) de la pale dans la position déployée.

8. Pale selon la revendication précédente, dans laquelle chaque volet d'obturation, amont (16) ou aval (17), comprend une base (16B, 17B) conformée pour épouser, au moins en partie, la face du moyeu (12, 13) en regard, dans la position déployée.

9. Pale selon l'une des revendications 7 ou 8, dans laquelle chaque volet d'obturation, amont (16) ou aval (17), est articulé à la pale (11), en particulier au pied de pale (15), par une liaison pivot (19).

10. Hélice, notamment pour turbomachine à soufflante non carénée, comprenant un moyeu (12, 13) monté rotatif autour d'un axe de rotation (L-L),
**caractérisée en ce qu'**elle comporte une pluralité de pales (11) du type de celle spécifiée sous l'une des revendications 1 à 9, qui sont montées sur ledit moyeu.

11. Hélice selon la revendication précédente, dans laquelle les pales (11) sont montées à calage variable, de manière à permettre leur orientation angulaire.

12. Turbomachine,
**caractérisée par le fait qu'**elle comporte au moins une hélice (7, 8) du type de celle spécifiée sous l'une des revendications 10 ou 11.

13. Turbomachine, selon la revendication précédente, à soufflante non carénée comportant deux hélices (7, 8) coaxiales et contrarotatives, dans laquelle au moins l'hélice amont (7) est du type de celle spécifiée sous l'une des revendications 10 ou 11.

## Patentansprüche

1. Rotorblatt, insbesondere mit variabler Einstellung, zur Montage auf der Nabe (12, 13) eines Rotors (7, 8) einer Turbomaschine (1), so dass ein Hohlraum (18, 18A, 18B) zwischen der Basis (14A) des Rotorblatts (14) und der Seite der Nabe (12, 13), welche der Basis (14A) zugewandt ist, definiert ist,
**dadurch gekennzeichnet, dass** es einziehbare Verschlussmittel (16, 17) aufweist, die eingerichtet sind, in einer reversiblen Weise mindestens eine der beiden folgenden Positionen einzunehmen:
- eine ausgezogene Position, in welcher die einziehbaren Verschlussmittel zumindest teilweise den Hohlraum (18, 18A, 18B) verschließen; und
- eine eingezogene Endposition, in welcher die einziehbaren Verschlussmittel außerhalb des Hohlraums vorgesehen sind.

2. Rotorblatt nach dem vorhergehenden Anspruch, wobei die ausgezogene Position eine Endposition ist.

3. Rotorblatt nach einem der vorhergehenden Ansprüche, mit mindestens einem Gehäuse (20, 21), welches in seiner Basis (14A) vorgesehen ist und eingerichtet ist, die Verschlussmittel (16, 17) aufzunehmen, wenn sie die eingezogene Position einnehmen.

4. Rotorblatt nach einem der vorhergehenden Ansprüche mit Betätigungsmitteln (22) zum Steuern des Ausziehens oder Einziehens der Verschlussmittel (16, 17), so dass sie nacheinander die ausgezogene Position und die eingezogene Position einnehmen und umgekehrt.

5. Rotorblatt nach dem vorhergehenden Anspruch, wobei die Betätigungsmittel (22) in dem Rotorblatt (11) untergebracht sind.

6. Rotorblatt nach Anspruch 4, in dem:
- die Betätigungsmittel (22) mindestens einen Elektromagneten umfassen, der in der Nabe (12, 13) des Rotors (7, 8) untergebracht ist; und
- die Verschlußmittel (16, 17) zumindest oberflächlich aus einem ferromagnetischen Material ausgebildet sind.

7. Rotorblatt nach einem der vorhergehenden Ansprüche, wobei die Verschlussmittel zumindest eine der beiden folgenden Elemente aufweisen:
eine stromaufwärts gelegene Verschlußklappe (16) mit einer Vorderkante (16A), welche die Vorderkante (11A) des Rotorblatts (11) in der ausgezogenen Position verlängert;
- eine stromabwärts gelegene Verschlußklappe (17) mit einer Hinterkante (17A), welche die Hinterkante (11A) des Rotorblatts (11) in der ausgezogenen Position verlängert;

8. Rotorblatt nach dem vorhergehenden Anspruch, bei dem jede Verschlußklappe, stromaufwärts (16) oder stromabwärts (17), eine Basis (16B, 17B) aufweist, die so angepasst ist, dass sie sich zumindest teilweise an die zugewandte Seite der Nabe (12, 13) in der ausgezogenen Position anschmiegt.

9. Rotorblatt nach einem der Ansprüche 7 oder 8, wobei jede Verschlußklappe, stromaufwärts (16) oder stromabwärts (17) mit dem Rotorblatt (11), insbesondere an der Rotorblattwurzel (15), durch eine Gelenkverbindung (19) verbunden ist.

10. Rotor, insbesondere für Nicht-Mantelstrom-Turbomaschinen, mit einer Nabe (12, 13) , die um eine Drehachse (L-L) drehbar angebracht ist, **dadurch gekennzeichnet, dass** sie mehrere Rotorblätter (11) des Typs, der in einem der Ansprüche 1 bis 9 angegeben ist, umfasst, die an der Nabe angebracht sind.

11. Rotor nach dem vorhergehenden Anspruch, wobei die Rotorblätter (11) mit variabler Einstellung angebracht sind, um ihre Winkelausrichtung zu ermöglichen.

12. Turbomaschine, **dadurch gekennzeichnet, dass** sie mindestens einen Rotor (7, 8) des Typs, der in einem der Ansprüche 10 oder 11 angegeben ist, umfasst.

13. Turbomaschine nach dem vorhergehenden Anspruch, die keine Mantelstrom-Turbomaschine ist, mit zwei koaxialen und entgegengesetzt rotierenden Rotoren (7, 8), wobei zumindest der stromaufwärts gelegene Rotor (7) des Typs ist, der in einem der Ansprüche 10 oder 11 angegeben ist.

## Claims

1. Vane, in particular a variable-pitch vane, intended to be mounted on the hub (12, 13) of a propeller (7, 8) of a turbine engine (1) such that an empty space (18, 18A, 18B) is defined between the base (14A) of the vane (14) and the face of the hub (12, 13) opposite said base (14A), **characterised in that** said vane comprises retractable closure means (16, 17) capable of occupying, in a reversible manner, at least one of the following two positions:
- a deployed position in which the retractable closure means close, at least in part, said empty space (18, 18A, 18B); and
- an extreme retracted position in which said retractable means are held outside said empty space.

2. Vane according to the preceding claim, wherein said deployed position is an extreme position.

3. Vane according to any of the preceding claims, comprising at least one compartment (20, 21) which is arranged in the base (14A) thereof and which is capable of receiving said closure means (16, 17) when they occupy the retracted position.

4. Vane according to any of the preceding claims, comprising actuating means (22) for controlling the deployment or the retraction of the closure means (16, 17) so that they successively occupy the deployed position and the retracted position, and vice versa.

5. Vane according to the preceding claim, wherein the actuating means (22) are housed in the vane (11).

6. Vane according to claim 4, wherein:
- the actuating means (22) comprise at least one electromagnet housed in the hub (12, 13) of the propeller (7, 8); and
- the closure means (16, 17) consist, at least superficially, of a ferromagnetic material.

7. Vane according to any of the preceding claims, wherein the closure means comprise at least one of the following two elements:
- an upstream closure flap (16) comprising a leading edge (16A) which extends the leading edge (11 A) of the vane (11) in the deployed position;
- a downstream closure flap (17) comprising a trailing edge (17A) which extends the trailing edge (11B) of the vane in the deployed position.

8. Vane according to the preceding claim, wherein each closure flap, upstream (16) or downstream (17), comprises a base (16B, 17B) which is adapted to conform in shape, at least in part, to the face of the opposite hub (12, 13), in the deployed position.

9. Vane according to either claim 7 or claim 8, wherein each upstream (16) or downstream (17) closure flap is articulated to the vane (11), in particular to the vane root (15), by a pin (19).

10. Propeller, in particular for an unducted fan turbine engine, comprising a hub (12, 13) which is rotatably mounted about an axis of rotation (L-L),
**characterised in that** said propeller comprises a plurality of vanes (11) of the type specified in any of claims 1 to 9, which are mounted on said hub.

11. Propeller according to the preceding claim, wherein the vanes (11) are mounted with variable pitch so as to allow the angular adjustment thereof.

12. Turbine engine,
**characterised in that** said turbine engine comprises at least one propeller (7, 8) of the type specified in either claim 10 or claim 11.

13. Turbine engine according to the preceding claim, of the unducted fan type and comprising two coaxial and counter-rotating propellers (7, 8), wherein at least the upstream propeller (7) is of the type specified in either claim 10 or claim 11.
